(19) Europäisches Patentamt
European Patent Office
Office européen des brevets

(11) EP 0 672 688 B2

(12) NEW EUROPEAN PATENT SPECIFICATION

(45) Date of publication and mention of the opposition decision:
**17.04.2002 Bulletin 2002/16**

(45) Mention of the grant of the patent:
**18.09.1996 Bulletin 1996/38**

(21) Application number: **95200999.1**

(22) Date of filing: **21.06.1991**

(51) Int Cl.[7]: **C08F 4/643**, C08F 10/00

# (54) Aluminum-free monocyclopentadienyl metallocene catalysts for olefin polymerization

Aluminiumfreie Monocyclopentadienyl-Metallocenkatalysatoren für Olefinpolymerisation

Catalyseurs à base de métallocène monocyclopentadiènylique dépourvus d'aluminium destinés à la polymérisation d'oléfines

(84) Designated Contracting States:
**BE DE ES FR GB IT NL SE**

(30) Priority: **22.06.1990 US 542236**

(43) Date of publication of application:
**20.09.1995 Bulletin 1995/38**

(62) Document number(s) of the earlier application(s) in accordance with Art. 76 EPC:
**91912554.2 / 0 551 277**

(73) Proprietor: **ExxonMobil Chemical Patents Inc.**
**Linden, NJ 07036-0710 (US)**

(72) Inventors:
- **Canich, Jo Ann Marie**
  **Houston, Texas 77058 (US)**
- **Hlatky, Gregory George**
  **Katy, Texas 77450 (US)**
- **Turner, Howard William**
  **Cupertino, California 95014 (US)**

(74) Representative: **UEXKÜLL & STOLBERG**
**Patentanwälte**
**Beselerstrasse 4**
**22607 Hamburg (DE)**

(56) References cited:
**EP-A- 0 277 004**
**EP-A- 0 416 815**
**EP-A- 0 418 044**
**US-A- 5 470 927**

- **Organometallics, 1995, vol. 14, pp. 3129-3131**
- **Journal of Organometallic Chemistry, 1994, 472, pp. 39-41**
- **Comprehensive Polymer Science, vol. 4, Chain Polymerization II, 1989, Chapter 1.9, pp. 19-25**
- **Encyclopedia of Polymer Science and Engineering, vol. 6, 1986, pp. 385, 404, 438-439**

EP 0 672 688 B2

## Description

SPECIFICATION

FIELD OF THE INVENTION

This invention relates to a process using a catalyst system obtainable from certain transition metal compounds of the Group IV-B metals of the Periodic Table of Elements and an ion-exchange activator compound for the production of polyethylene and ethylene-α-olefin copolymers.

BACKGROUND OF THE INVENTION

As is well known, various processes and catalysts exist for the homopolymerization or copolymerization of olefins.

EP 277003 and EP 277004 disclose ionic metallocene based catalysts obtainable from bis (cyclopentadienyl) derivatives of a Group IV-B metal compound and reagents which will irreversibly react with the Group IV-B metal compounds, and their use in polymerization of olefins.

EP 129368 discloses monocyclopentadienyl Group IV-B metal compounds which form catalysts with alumoxane, which Group IV-B compounds may have halo ligands and include no heteroatom ligand bonded through the heteroatom to the metal.

EP 250601 (WO 8703887) discloses catalysts of bis(cyclopentadienyl) derivatives of Group IV-B metals and alumoxane which include heteroatom ligands bonded through the heteroatom to the metal. Monocycopentadienyl compounds are referred to generically in the claims. EP 250601 does not disclose a cocatalyst other than alumoxane and does not disclose monocyclopentadienyl compounds having a bridge between the heteroatom and the cyclopentadienyl ring.

EP 418044 discloses catalysts comprising a monocyclopentadienyl or substituted monocyclopentadienyl metal complex containing compound corresponding to the formula: $CpMX_n{}^+A^-$, wherein Cp is a single $\eta^5$ cyclopentadienyl or $\eta^5$-substituted cyclopentadienyl group optionally covalently bonded to M through a substituent: M is a metal of Group IIIB, IVB, VB, VIB, VIII or the Lanthanide Series of the Periodic Table bound in an $\eta^5$ bonding mode to the cyclopentadienyl or substituted cyclopentadienyl group; X is independently each occurrence halo, alkyl, aryl, $-NR_2$ aroxy or alkoxy of up to 20 carbons, or two or more X groups together form a metallocycle with M: R is alkyl or aryl of up to 10 carbons; n is one or two depending on the valence of M; and A is a non-coordinating, compatible anion of a Bronsted acid salt. Example 1 uses pentamethyl cyclopentadienyl titanium isopropoxide dimethyl which contains a heteroatom in combination with an alkyl ligand. The earliest priority document from which EP 418044 claims priority discloses the polymerization of a lower α-olefin having from 2 to 8 carbon atoms at a temperature within the range from 0°C to 100°C and at a pressure within the range from 100 kPa to 3400 kPa using as the catalyst system a substituted monocyclopentadienyl metal complex containing compound corresponding to the formula: $CpMX_n{}^+A^-$ wherein Cp is a single $\eta^5$-substituted cyclopentadienyl group covalently bonded to M through a substituent ; X is hydride alkyl, aryl, aryloxy or alkoxy of up to 20 carbons; and n is one.

The invention seeks to provide a process for producing polyolefin that does not contain an undesirable amount of catalyst residue (or ash content, measured as the non-volatile aluminum and transition metal content).

Aluminum alkyl-free olefin polymerization catalysts derived from transition metal complexes containing fewer than two cyclopentadiene have been relatively unexplored. John Bercaw reported [Organomeiallics. 1990. 9, 867] the synthesis of a monocyclopentadienyl scandium polymerization catalyst. $[Me_2Si(C_5Me_4)$ $(N\text{-}Bu^t)ScH(PMe_3]_2$. This neutral Group III catalyst has a low activity and is very expensive due to the high cost of scandium metal.

SUMMARY OF THE INVENTION

The process of the invention for the homopolymerization of ethylene or copolymerization of ethylene with an α-olefin having 3 to 18 carbon atoms, wherein ethylene is submitted to a reaction zone at a pressure of from 0.0013 bar to 3445 bar and a reaction temperature is maintained at from -100 to 300°C , uses a catalyst system as defined in claim 1.

The catalyst system is represented by the general formula:

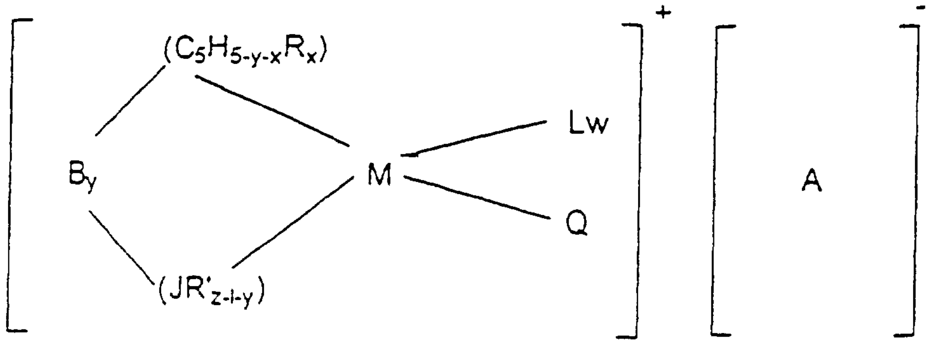

wherein: M is Zr, Hf or Ti and is in its highest formal oxidation state (+4. $d^0$ complex):

$(C_5H_{5-y-x}R_x)$ is a cyclopentadienyl ring which is substituted with from zero to four substituent groups R, "x" is 0, 1, 2,3, or 4 denoting the degree of substitution, and each substituent group R is: independently, a radical selected from a group consisting of $C_1$-$C_{20}$ hydrocarbyl radicals, substituted $C_1$-$C_{20}$ hydrocarbyl radicals wherein one or more hydrogen atoms is replaced by a halogen atom, $C_1$-$C_{20}$ hydrocarbyl-substituted metalloid radicals wherein the metalloid is selected from the Group IV-A of the Periodic Table of Elements, and halogen radicals; or $(C_5H_{5-y-x}R_x)$ is a cyclopentadienyl ring in which two adjacent R-groups are joined forming a $C_4$-$C_{20}$ ring to give a polycyclic cyclopentadienyl ligand such as indenyl and fluorenyl derivatives:

$(JR'_{z-l-y})$ is a heteroatom ligand in which J is an element with a coordination number of three from Group V-A or an element with a coordination number of two from Group VI-A of the Periodic Table of Elements, preferably nitrogen, phosphorus. oxygen or sulfur. and each R' is, independently a radical selected from a group consisting of $C_1$-$C_{20}$ hydrocarbyl radicals, substituted $C_1$-$C_{20}$ hydrocarbyl radicals wherein one or more hydrogen atoms is replaced by a halogen atom, and "z" is the coordination number of the element J:

Q is hydride, a $C_1$-$C_{50}$ hydrocarbyl radical, or substituted hydrocarbyl radical wherein one or more hydrogen atoms is replaced by an electron-withdrawing group such as a halogen atom, or alkoxide radical, or a $C_1$-$C_{50}$ hydrocarbyl-substituted metalloid radical wherein the metalloid is selected from the Group IV-A of the Period Table of Elements, provided that where Q is a hydrocarbyl such Q is different from $(C_5H_{5-y-x}R_x)$,

"y" is 1, B is a covalent bridging group containing a Group IV A or V A element such as, but not limited to, a dialkyl, alkylaryl or diaryl silicon or germanium radical, alkyl or aryl phosphine or amine radical, or a hydrocarbyl radical such as methylene or ethylene:

L is a neutral Lewis base such as diethylether, tetrahydrofuran, dimethylaniline, aniline, trimethylphosphine or n-butylamine; and "w" is a number from 0 to 3.

[A]- is a labile, bulky anion which is a single coordination complex having a plurality of lipophilic radicals covalently coordinated to and shielding a central charge-bearing metal or metalloid core and may be formed when the second component. an activator compound comprising a cation which will irreversibly react with at least one ligand contained in said Group IV-B metal compound and a noncoordinating anion [A]-, is combined with the Group IV-B transition metal component, or 'first component'. The cation of the second component reacts with one of the ligands of the first component. thereby generating an ion pair consisting of a Group IV-B metal cation with a formal coordination number of 3 and a valence of +4 and the aforementioned anion, which anion is compatible with and non-coordinating toward the metal cation formed from the first component. Illustrative but not limiting examples of cations of the second component include Bronsted acids such as ammonium ions or reducible Lewis acids such as $Ag^+$ or ferrocenium ions. The anion of the second compound stabilizes the Group IV-B metal cation complex without interfering with the Group IV-B metal cation's or its decomposition product's ability to function as a catalyst and is sufficiently labile to permit displacement by an olefin, diolefin or an acetylenically unsaturated monomer during polymerization.

Catalyst systems of the invention may be prepared by placing the Group IV-B transition metal component and the ion-exchange component in common solution in a normally liquid alkane or aromatic solvent, which solvent is preferably suitable for use as a polymenzation diluent for the liquid phase polymerization of an olefin monomer. Suitable catalysts can also be prepared by reacting the components and adsorbing on a suitable support material (inorganic

oxides or polymers, for example) or by allowing the components to react on such support.

A typical polymerization process of the invention for the polymerization or copolymerization of ethylene comprises the steps of contacting ethylene alone, or with other unsaturated monomers including $C_3$-$C_{18}$ $\alpha$-olefins, either alone or in combination with other olefins and/or other unsaturated monomers, with the catalyst of the invention, in a suitable polymerization diluent; the catalyst system being obtainable from the Group IV-B transition metal component and the ion-exchange activator component illustrated below in an amount to provide a molar transition metal to activator ratio of from 1:10 to 200:1 or more: and reacting such monomer in the presence of such catalyst system at a temperature of from -100°C to 300°C for a time of from 1 second to 10 hours to produce a polyolefin having a weight average molecular weight of from 1,000 or less to 5.000,000 or more and a molecular weight distribution of 1.5 or greater.

DESCRIPTION OF THE PREFERRED EMBODIMENT

Ionic Catalyst System - General Description

The process of this invention is practiced with that class of ionic catalysts prepared by combining at least two components. The first of these is a monocyclopentadienyl derivative of a Group IV-B metal compound containing at least one ligand which will combine with the second component or at least a portion thereof such as a cation portion thereof. The second component is an activator, ion-exchange compound comprising a cation which will irreversibly react with at least one ligand contained in said Group IV-B metal compound and a bulky, labile anion which is normally non-coordinating and stable. Upon combination of the first and second components, the cation of the second component reacts with one of the ligands of the first component. thereby generating an ion pair consisting of a Group IV-B metal cation with a formal coordination number of 3 and a valence of +4 and the aforementioned anion, which anion is compatible with and non-coordinating towards the metal cation formed from the first component. The anion of the second compound stabilizes the Group IV-B metal cation complex without interfering with the Group IV-B metal cation's or its decomposition product's ability to function as a catalyst and is sufficiently labile to permit displacement by an olefin, diolefin or an acetylenically unsaturated monomer during polymerization.

A. Catalyst Component

The Group IV-B transition metal component from which the catalyst system may be prepared is represented by the general formula:

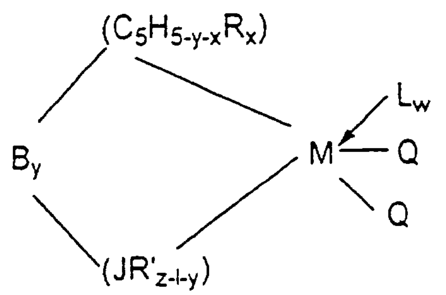

wherein: M is Zr, Hf or Ti and is in its highest formal oxidation state (+4, $d^0$ complex);

($C_5H_{5-y-x}R_x$) is a cyclopentadienyl ring which is substituted with from zero to four substituent groups R, "x" is 0, 1, 2, 3, or 4 denoting the degree of substitution, and each substituent group R is, independently, a radical selected from a group consisting of $C_1$-$C_{20}$ hydrocarbyl radicals, substituted $C_1$-$C_{20}$ hydrocarbyl radicals wherein one or more hydrogen atoms is replaced by a halogen atom, $C_1$-$C_{20}$ hydrocarbyl-substituted metalloid radicals wherein the metalloid is selected from the Group IV-A of the Periodic Table of Elements, and halogen radicals; or ($C_5H_{5-y-x}R_x$) is a cyclopentadienyl ring in which two adjacent R-groups are joined forming a $C_4$-$C_{20}$ ring to give a polycyclic cyclopentadienyl ligand such as indenyl and fluorenyl derivatives;

($JR'_{z-l-y}$) is a heteroatom ligand in which J is an element with a coordination number of three from Group V-A or an element with a coordination number of two from Group VI-A of the Periodic Table of Elements, preferably nitrogen, phosphorus, oxygen or sulfur with nitrogen being preferred, and each R' is, independently a radical selected from a group consisting of $C_1$-$C_{20}$ hydrocarbyl radicals, substituted $C_1$-$C_{20}$ hydrocarbyl radicals wherein one or more hydrogen atoms is replaced by a halogen atom, and "z" is the coordination number of the element J;

each Q may be independently, hydride, $C_1$-$C_{50}$ (preferably $C_1$-$C_{20}$) hydrocarbyl radicals, substituted hydrocarbyl radicals wherein one or more hydrogen atoms is replaced by an electron-withdrawing group such as a halogen atom, or alkoxide radical, or $C_1$-$C_{50}$ (preferably $C_1$-$C_{20}$) hydrocarbyl-substituted metalloid radicals wherein the metalloid is selected from the Group IV-A of the Periodic Table of Elements, provided that where any Q is a hydrocarbyl such Q is different from ($C_5H_{5-y-x}R_x$), or both Q together may be an alkylidene, olefin, acetylene or a cyclometallated hydrocarbyl;

"y" is 1, B is a covalent bridging group containing a Group IV A or V A element such as, but not limited to, a dialkyl, alkylaryl or diaryl silicon or germanium radical, alkyl or aryl phosphine or amine radical, or a hydrocarbyl radical such as methylene or ethylene. Examples of the B group which are suitable as a constituent group of the Group IV B transition metal component of the catalyst system are identified in Column 1 of Table 1 under the heading "B".

L is a neutral Lewis base such as diethylether, tetrahydrofuran, dimethylaniline, aniline, trimethylphosphine, n-butylamine and "w" is a number from 0 to 3: L can also be a second transition metal compound of the same type such that the two metal centers M and M' are bridged by Q and Q', wherein M' has the same meaning as M and Q' has the same meaning as Q. Such compounds are represented by the formula:

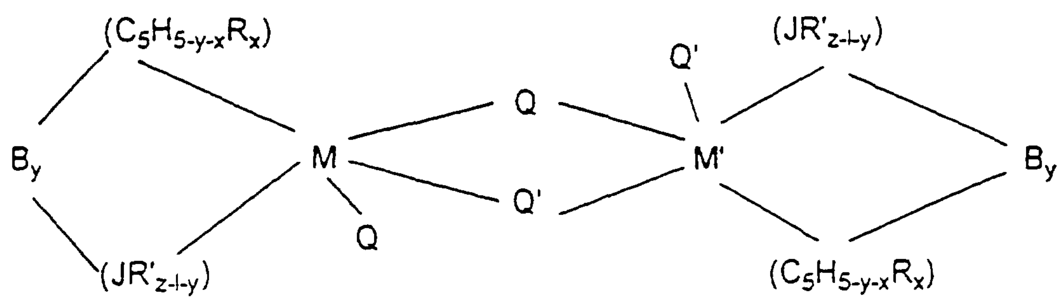

Exemplary hydrocarbyl radicals for the Q are methyl, ethyl, propyl, butyl, amyl, isoamyl, hexyl, Isobutyl, heptyl, octyl, nonyl, decyl, cetyl, 2-ethylhexyl or phenyl, with methyl being preferred. Exemplary substituted hydrocarbyl radicals include trifluoromethyl, pentafluorphenyl, trimethylsilylmethyl, and trimethoxysilylmethyl. Exemplary hydrocarbyl substituted metalloid radicals include trimethylsilyl, trimethylgermyl or triphenylsilyl. Exemplary alkyldiene radicals for both Q together are methylidene, ethylidene and propylidene. Examples of the Q group which are suitable as a constituent group or element of the Group IV B transition metal component of the catalyst system are identified in Column 4 of Table 1 under the heading "Q".

Suitable hydrocarbyl and substituted hydrocarbyl radicals, which may be substituted as an R group for at least one hydrogen atom in the cyclopentadienyl ring, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Suitable organometallic radicals, which may be substituted as an R group for at least one hydrogen atom in the cyclopentadienyl ring, include trimethylsilyl, triethylsilyl, ethyldimethylsilyl, methyldiethylsilyl, triphenylgermyl and trimethylgermyl. Examples of cyclopentadienyl ring groups ($C_5H_{5-y-x}R_x$) which are suitable as a constituent group of the Group IV-B transition metal component of the catalyst system are identified in Column 2 of Table 1 under the heading ($C_5H_{5-y-x}R_x$).

Suitable hydrocarbyl and substituted hydrocarbyl radicals. which may be substituted as an R' group for at least one hydrogen atom in the heteroatom J ligand group, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Examples of heteroatom ligand groups ($JR'_{z-l-y}$) which are suitable as a constituent group of the Group IV B transition metal component of the catalyst system are identified in Column 3 of Table 1 under the heading ($JR'_{z-l-y}$).

Table 1 depicts representative constituent moieties for the "Group IV-B transition metal component" from which the catalyst system as defined in claim 1 may be prepared. The list is for illustrative purposes only and should not be construed to be limiting in any way. A number of final components may be formed by permuting all possible combinations of the constituent moieties with each other. Illustrative compounds are: dimethylsilyltetramethylcyclopentadienyl-tert-butylamido zirconium dimethyl, dimethylsilyltetramethylcyclopentadienyl-tert-butylamido hafnium diethyl, dimethylsilyl-tert-butylcyclopentadienyl-tert-butylamido zirconium dihydride, dimethylsilyl-tert-butylcyclopentadienyl-tert-butylamido hafnium diphenyl, dimethylsilyltrimethylsilylcydopentadienyl-tert-butylamido zirconium dihydride,

dimethylsilyltetramethylcydopentadienylphenylamido titanium dimethyl, dimethylsilyltetramethylcyclopentadienylphenylamido hafnium ditolyl, methylphenylsilyltetramethylcyclopentadienyl-tert-butylamido zirconium dihydride, methylphenylsilyltetramethylcyclopentadienyl-tert-butylamido hafnium dimethyl, dimethylsilylfluorenyl-cyclohexylamide titanium dimethyl, diphenylgermylindenyl-t-butyl phosphido dihydride, methylphenylsilyltetramethylcyclopentadienyl-tert-butylamido hafnium dimethyl, dimethylsilyltetramethylcyclopentadienyl-p-n-butylphenylamido zirconium dihydride, dimethylsilyltetramethylcyclopentadienyl-p-n-butylphenylamido hafnium ditrimethylsilyl. For illustrative purposes, the above compounds and those permuted from Table 1 do not include the neutral Lewis base ligand (L). The conditions under which complexes containing neutral Lewis base ligands such as ether or those which form dimers is determined by the steric bulk of the ligands about the metal center. Similarly, due to the decreased steric bulk of the trimethylsilylcyclopentadienyl group in $[Me_2Si(Me_3SiC_5H_3)(N\text{-}t\text{-}Bu)ZrH_2]_2$ versus that of the tetramethylcyclopentadienyl group in $Me_2Si(Me_4C_5)(N\text{-}t\text{-}Bu)\text{-}ZrH_2$, the former compound is dimeric and the latter is not.

A preferred method of preparing the bridged species of the Group IV-B transition metal compound ("y"=1) is by reacting a cyclopentadienyl lithium compound with a dihalo-compound whereupon a lithium halide salt is liberated and a monohalo substituent becomes covalently bound to the cyclopentadienyl compound. The so substituted cyclopentadienyl reaction product is next reacted with a lithium salt of a phosphide, oxide, sulfide or amide (for the sake of illustration, a lithium amide) whereupon the halo element of the monohalo substituent group of the reaction product reacts to liberate a lithium halide salt and the amine moiety of the lithium amide salt becomes covalently

TABLE 1

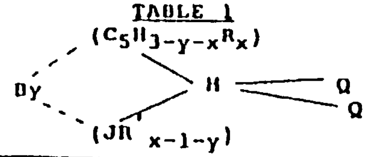

| B | $C_5H_{3-y-x}R_x$) | $(JR'_{x-1-y})$ | Q | M |
|---|---|---|---|---|
| dimethylsilyl | cyclopentadienyl | t-butylamido | hydrido | zirconium |
| diethylsilyl | methylcyclopentadienyl | phenylamido | methyl | hafnium |
| di-n-propylsilyl | 1,2-dimethylcyclopentadienyl | p-n-butylphenylamido | ethyl | titanium |
| diisopropylsilyl | 1,3-dimethylcyclopentadienyl | cyclohexylamido | phenyl | |
| di-n-butylsilyl | indenyl | perflurophenylamido | n-propyl | |
| di-t-butylsilyl | 1,2-diethylcyclopentadienyl | n-butylamido | isopropyl | |
| di-n-hexylsilyl | tetramethylcyclopentadienyl | methylamido | n-butyl | |
| methylphenylsilyl | ethylcyclopentadienyl | ethylamido | amyl | |
| ethylmethylsilyl | n-butylcyclopentadienyl | n-propylamido | isoamyl | |
| diphenylsilyl | cyclohexylmethylcyclopentadienyl | isopropylamido | hexyl | |
| di(p-t-butylphenethylsilyl) | n-octylcyclopentadienyl | benzylamido | isobutyl | |
| n-hexylmethylsilyl | β-phenylpropylcyclopentadienyl | t-butylphosphido | heptyl | |
| cyclopentamethylenesilyl | tetrahydroindenyl | ethylphosphido | octyl | |
| cyclotetramethylenesilyl | propylcyclopentadienyl | phenylphosphido | nonyl | |
| cyclotrimethylenesilyl | t-butylcyclopentadienyl | cyclohexylphosphido | decyl | |
| dimethylgermanyl | benzylcyclopentadienyl | oxo | cetyl | |
| diethylgermanyl | diphenylmethylcyclopentadienyl | sulfido | methylidene (both Q) | |
| phenylamido | trimethylgermylcyclopentadienyl | | ethylidene (both Q) | |
| t-butylamido | trimethylstannylcyclopentadienyl | | propylidene (both Q) | |
| methylamido | triethylplumbylcyclopentadienyl | | | |
| t-butylphosphido | trifluromethylcyclopentadienyl | | | |
| ethylphosphido | trimethylsilylcyclopentadienyl | | | |
| phenylphosphido | fluorenyl | | | |
| methylene | methylfluorenyl | | | |
| dimethylmethylene | octahydrofluorenyl | | | |
| diethylmethylene | | | | |
| ethylene | | | | |
| dimethylethylene | | | | |
| diethylethylene | | | | |
| dipropylethylene | | | | |
| propylene | | | | |
| methylpropylene | | | | |
| diethylpropylene | | | | |
| 1,1-dimethyl-3,3-dimethylpropylene | | | | |
| tetramethyldisiloxane | | | | |
| 1,1,4,4-tetramethyldisilylethylene | | | | |

bound to the substituent of the cyclopentadienyl reaction product. The resulting amine derivative of the cyclopentadienyl product is then reacted with an alkyl lithium reagent whereupon the labile hydrogen atoms. at the carbon atom of the cyclopentadienyl compound and at the nitrogen atom of the amine moiety covalently bound to the substituent group, react with the alkyl of the lithium alkyl reagent to liberate the alkane and produce a dilithtum salt of the cyclopentadienyl compound. Thereafter the bridged species of the Group IV-B transition metal compound is produced by reacting the dilithium salt cyclopentadienyl compound with a Group IV-B transition metal preferably a Group IV-B transition metal halide. This procedure yields the dichloro-derivative of the monocyclopentadienyl-amido Group IV-B compound. The dichloride complex is then converted into the appropriate hydrocarbyl derivative using the corresponding Grignard, lithium, sodium or potassium salt of the hydrocarbyl ligand. The procedures used are analogous to those developed for alkylating the Group IV-B metallocene complexes (i.e., the biscyclopentadienyl systems).

Suitable, but not limiting, Group IV-B transition metal compounds which may be utilized in the preparation of the catalyst system of this invention include those bridged species ("y"=1) wherein the B group bridge is a linear branched or cyclic alkylene group having from 1 to 6 carbon atoms. an alkyl substituted sila alkylene group having from 1 to 2 silicon atoms in place of carbon atoms in the bridge or a $Si_1$-$Si_2$ alkyl substituted silanylene group, and is preferably a dialkyl, diaryl or alkylaryl silane, or methylene or ethylene. Examples of the more preferred species of bridged Group IV B transition metal compounds are dimethylsilyl, methylphenylsilyl, diethylsilyl, ethylphenylsilyl, diphenylsilyl, ethylene or methylene bridged compounds. Most preferred of the bridged species are dimethylsilyl, diethylsilyl and methylphenylsilyl bridged compounds.

To illustrate members of the Group IV-B transition metal component, select any combination of the species in Table 1. An example of a bridged species would be dimethylsilyl-cyclopentadienyl-t-butylamidodimethyl zirconium.

B. <u>The Activator Component</u>

Compounds useful as an activator component in the preparation of the catalyst system used in the process of this invention will comprise a cation, which may be a Bronsted acid capable of donating a proton, and an anion which is normally compatible, noncoordinating, bulky, capable of stabilizing the active catalyst species (the Group IV-B cation) which is formed when the two compounds are combined and which is sufficiently labile to be displaced by olefinic, diolefinic and acetylenically unsaturated substrates or other neutral Lewis bases such as ethers. nitriles and the like. Such compatible non-coordinating anions have been disclosed in our European Patent Application 277,004: anionic single coordination complexes comprising a plurality of lipophilic radicals covalently coordinated to and shielding a central charge-bearing metal or metalloid core.

In general, activator compounds containing single anionic coordination complexes which are useful in this invention may be represented by the following general formula:

$$5.\ [(L'\text{-}H)^{+}]_d[(M')^{m+}Q_1Q_2...Q_n]^{d-}$$

wherein:

L' is a neutral Lewis base;
H is a hydrogen atom;
[L'-H] is a Bronsted acid;
M' is a metal or metalloid selected from the Groups subtended by Groups V-B to V-A of the Periodic Table of the Elements: i.e.. Groups V-B, VI-B, VII-B, VIII, I-B, II-B, III-A IV-A, and V-A;
$Q_1$ to $Q_n$ are selected, independently, from the Group consisting of hydride radicals, dialkylamido radicals, alkoxide and aryloxide radicals, hydrocarbyl and substituted-hydrocarbyl radicals and organometalloid radicals and any one, but not more than one, of $Q_1$ to $Q_n$ may be a halide radical, the remaining $Q_1$ to $Q_n$ being, independently, selected from the foregoing radicals;
m is an integer from 1 to 7; n is an integer from 2 to 8; and n - m = d.

As indicated above. any metal or metalloid capable of forming an anionic complex which is stable in water may be used or contained in the anion of the second compound. Suitable metals, then, include, but are not limited to, aluminum, gold and platinum. Suitable metalloids include, but are not limited to, boron, phosphorus and silicon. Compounds containing anions which comprise coordination complexes containing a single metal or metalloid atom are, of course, well known and many. particularly such compounds containing a single boron atom in the anion portion, are available commercially. In light of this, salts containing anions comprising a coordination complex containing a single boron atom are preferred.

The preferred activator compounds comprising boron may be represented by the following general formula:

$$5A.\ [(L'\text{-}H)^{+}[BAr_1Ar_2X_3X_4]^{-}$$

wherein:

L' is a neutral Lewis base;
H is a hydrogen atom;
$[L'\text{-}H]^-$ is a Bronsted acid;
B is boron in a valence state of 3;
$Ar_1$ and $Ar_2$ are the same or different aromatic or substituted-aromatic hydrocarbon radicals containing from 6 to 20 carbon atoms and may be linked to each other through a stable bridging group; and
$X_3$ and $X_4$ are radicals selected independently, from the group consisting of hydride radicals, halide radicals, with the proviso that $X_3$ and $X_4$ will not be halide at the same time, hydrocarbyl radicals containing from 1-to 20 carbon atoms. substituted-hydrocarbyl radicals, wherein one or more of the hydrogen atoms is replaced by a halogen atom, containing from 1 to 20 carbon atoms, hydrocarbyl-substituted metal (organometalloid) radicals wherein each hydrocarbyl substitution contains from 1 to 20 carbon atoms and said metal is selected from Group IV-A of the Periodic Table of the Elements.

In general, $Ar_1$ and $Ar_2$ may, independently, be any aromatic or substituted-aromatic hydrocarbon radical containing from 6 to 20 carbon atoms. Suitable aromatic radicals include, but are not limited to, phenyl, naphthyl and anthracenyl radicals. Suitable substituents on the substituted-aromatic hydrocarbon radicals, include, but are not necessarily limited to, hydrocarbyl radicals, organometalloid radicals, alkoxy radicals, alkylamido radicals, fluoro and fluorohydrocarbyl radicals such as those useful as $X_3$ and $X_4$. The substituent may be ortho, meta or para, relative to the carbon atoms bonded to the boron atom. When either or both $X_3$ and $X_4$ are a hydrocarbyl radical, each may be the same or a different aromatic or substituted-aromatic radical as are $Ar_1$ and $Ar_2$, or the same may be a straight or branched alkyl, alkenyl or alkynyl radical having from 1 to 20 carbon atoms, a cyclic hydrocarbon radical having from 5 to 8 carbon atoms or an alkyl-substituted cyclic hydrocarbon radical having from 6 to 20 carbon atoms. $X_3$ and $X_4$ may also, independently, be alkoxy or dialkylamido radicals wherein the alkyl portion of said alkoxy and dialkylamido radicals contain from 1 to 20 carbon atoms, hydrocarbyl radicals and organometalloid radicals having from 1 to 20 carbon atoms. As indicated above, $Ar_1$ and $Ar_2$ may be linked to each other. Similarly, either or both of $Ar_1$ and $Ar_2$ could be linked to either $X_3$ or $X_4$. Finally, $X_3$ or $X_4$ may also be linked to each other through a suitable bridging group.

Illustrative, but not limiting, examples of boron compounds which may be used as an activator component in the preparation of the improved catalyst system used in the process of this invention are trialkyl-substituted ammonium salts such as triethylammonium tetra(phenyl)boron, tripropylammonium tetra(phenyl)boron, tri(n-butyl)ammonium tetra (phenyl)boron, trimethylammonium tetra(p-tolyl)boron, trimethylammonium tetra(o-tolyl)boron, tributylammontum tetra (pentafluorophenyl)boron, tripropylammonium tetra(o.p-dimethylphenyl)boron, tributylammonium tetra(m,m-dimethylphenyl)boron, tributylammontum tetra(p-tri-fluoromethylphenyl)boron and tri(n-butyl)ammonium tetra(o-tolyl)boron: N, N-dialkyl anilinium salts such as N,N-dimethylanilinium tetra(pentafluorophenyl)boron, N,N-diethylanilinium tetra(phenyl)boron and N,N-2,4,6-pentamethylanilinium tetra(phenyl)boron: dialkyl ammonium salts such as di(i-propyl)ammonium tetra(pentafluorophenyl) boron and dicyclohexylammonium tetra(phenyl)boron: and triaryl phosphonium salts such as triphenylphosphonium tetra(phenyl)boron, tri(methylphenyl)-phosphonium tetra(phenyl)boron and tri(dimethylphenyl)phosphonium tetra(phenyl)boron.

Similar lists of suitable compounds containing other metals and metalloids which are useful as activator components may be made, but such lists are not deemed necessary to a complete disclosure. In this regard, it should be noted that the foregoing list is not intended to be exhaustive and that other useful boron compounds as well as useful compounds containing other metals or metalloids would be readily apparent to those skilled in the art from the foregoing general equations.

Process of Catalyst Preparation

The catalyst systems employed in the process of the invention comprise a complex formed upon admixture of the Group IV-B transition metal component with the activator component. The catalyst system may be prepared by addition of the requisite Group IV-B transition metal and activator components to an inert solvent in which olefin polymerization can be carried out by a solution polymerization procedure.

The catalyst system may be conveniently prepared by placing the selected Group IV-B transition metal component and the selected activator component. in any order of addition, in an alkane or aromatic hydrocarbon solvent -- preferably toluene. The catalyst system may be separately prepared, in concentrated form, and added to the polymerization diluent in a reactor. Or, if desired, the components of the catalyst system may be prepared as separate solutions and added to the polymerization diluent in a reactor, in appropriate ratios, as is suitable for a continuous liquid polymerization reaction procedure. Alkane and aromatic hydrocarbons suitable as solvents for formation of the catalyst system and also as a polymerization diluent are exemplified by, but are not necessarily limited to, straight and branched chain hydrocarbons such as isobutene, butane, pentane, hexane, heptane and octane, cyclic and alicyclic hydrocarbons such as cyclohexane, cycloheptane, methylcyclohexane and methylcycloheptane, and aromatic and alkyl-substituted aromatic compounds such as benzene, toluene and xylene. Suitable solvents also include liquid olefins which may act as monomers or comonomers including ethylene, propylene, butene and 1-hexene.

In accordance with this invention optimum results are generally obtained wherein the Group IV-B transition metal compound is present in the polymerization diluent in concentration of from 0.01 to 1.0 millimoles/liter of diluent and the activator component is present in an amount to provide a molar ratio of the transition metal to activator component from 1:1 to 200:1. Sufficient solvent should be employed so as to provide adequate heat transfer away from the catalyst components during reaction and to permit good mixing.

The catalyst system ingredients -- that is, the Group IV-B transition metal and activator components. and polymerization diluent can be added to the reaction vessel rapidly or slowly. The temperature maintained during the contact of the catalyst components can vary widely, such as, for example, from -10° to 300°C. Lesser temperatures can also be employed. Preferably, during formation of the catalyst system, the reaction is maintained within is a temperature of from 25° to 100°C, most preferably 25°C.

At all times, the individual catalyst system components, as well as the catalyst system once formed. are protected from oxygen and moisture. Therefore, the reactions are performed in an oxygen and moisture free atmosphere and, where the catalyst system is recovered separately, it is recovered in an oxygen and moisture free atmosphere. Preferably. therefore, the reactions are performed in the presence of an inert dry gas such as, for example, helium or nitrogen.

<u>The Catalyst System: Characterization and Properties of the Active Site</u>

The reaction of the two catalyst components can be viewed as a simple acid-base reaction where the $Q^-$-ligand bound to the transition metal center of $(CN)MQ_2$ (where (CN) = Cp and J-ligands) reacts with the cation of the second component, which may be acidic, $[L'H^+][A]^-$ (where $A^-$ is the non-coordinating anion), to give the ionic catalyst $[(CN)\ MQ^+[A]^-$ and neutral biproducts Q-H and L'. The overall catalytic performance of the catalyst depends on the choice of metal, the specific (CN)-ligand set, the structure and stability of A-, and the coordinating ability of the cation or Lewis base L'. For conventional applications where a high productivity homopolymerization or random copolymerization catalyst is desired, the cation is a proton donor and the Q-ligand of the transition metal component is chosen so that: 1) the metal complex is easy to prepare and is low cost: 2) $(CN)MQ_2$ is sufficiently basic to deprotonate the acidic cation of the activator component: and 3) Q-H is an unreactive biproduct such as an alkane so that the activation reaction is irreversible. For a particular (CN)M-system the L' and $A^-$ portions of the activator component "tune" the stability and overall performance of the catalyst system. The ability of L' and $A^-$ to modify the behavior of a catalyst site increases the versatility of the polymerization system which is an important advantage over conventional methods of activation (e.g. methylalumoxane, and other aluminum alkyl cocatalysts).

In general, and while most transition metal components identified above may be combined with most activator components identified above to produce an active olefin polymerization catalyst. it is important for continuity of the polymerization operations that either the metal cation initially formed from the first component or a decomposition product thereof be stable. It is also important that the anion of the activator compound be stable to hydrolysis when an ammonium salt is used. Further, it is important that the positive charge of the activator component be sufficient, relative to the metal component, to facilitate the needed cation, e.g., proton transfer. Activator compounds containing aryl-ammonium salts such as N,N-dimethylantlium are more acidic than trialkylammonium salts and therefore are useful with a wider variety of transition metal components. The basicity of the metal complex must also be sufficient to facilitate the needed proton transfer. In general. transition metal compounds which can be hydrolysed by aqueous solutions can be considered suitable as metallocene components to form the catalysts described herein.

With respect to the combination of the transition metal component with the activator component to form a catalyst system for use in the process of this invention, it should be noted that the two compounds combined for preparation of the active catalyst must be selected so as to avoid transfer of a fragment of the anion to the metal cation, thereby forming a catalytically inactive species. This could be done by steric hindrance. resulting from substitutions on the Cp- and/or J-ligands of the first component, as well as substitutions on the non-coordinating anion.

As the amount and size of the substitutions on the transition metal components are reduced, more effective catalysts are obtained with activator compounds containing non-coordinating anions which are larger in size and more resistant to degradation. In the case where the non-coordinating anion is an anionic coordination complex, such as a tetraphenylboron derivative, substitutions on the phenyl rings can be used to prevent the transfer of a proton or an entire phenyl group from the anion to the metal. This can be accomplished by alkyl substitution in the ortho positions

of the phenyl groups, or, more preferably, by perfluoro-substitutions on the anion. Thus, anionic coordination complexes containing perfluorophenyl-, trifluoromethylphenyl-, or bis-trifluormethylphenyl rings are preferred for this subgenus of activator components.

Several new compositions of matter have been identified using high field NMR spectroscopy. The reaction between $Me_2Si(Me_4C_5)$ (N-t-Bu)$ZrMe_2$ and [DMAH][$B(pfp)_4$] (where DMAH = $PhMe_2NH^+$ and pfp = $C_6F_5$) in $d^8$-toluene produces a two phase system. The top layer is largely $d^8$-toluene with only a very small amount of DMA (DMA - $PhNMe_2$) present. The lower layer contains the ionic catalyst and $d^8$-toluene. The high field $^{13}C$ NMR spectrum of the lower layer suggests the reaction proceeds to give the DMA-adduct as shown below.

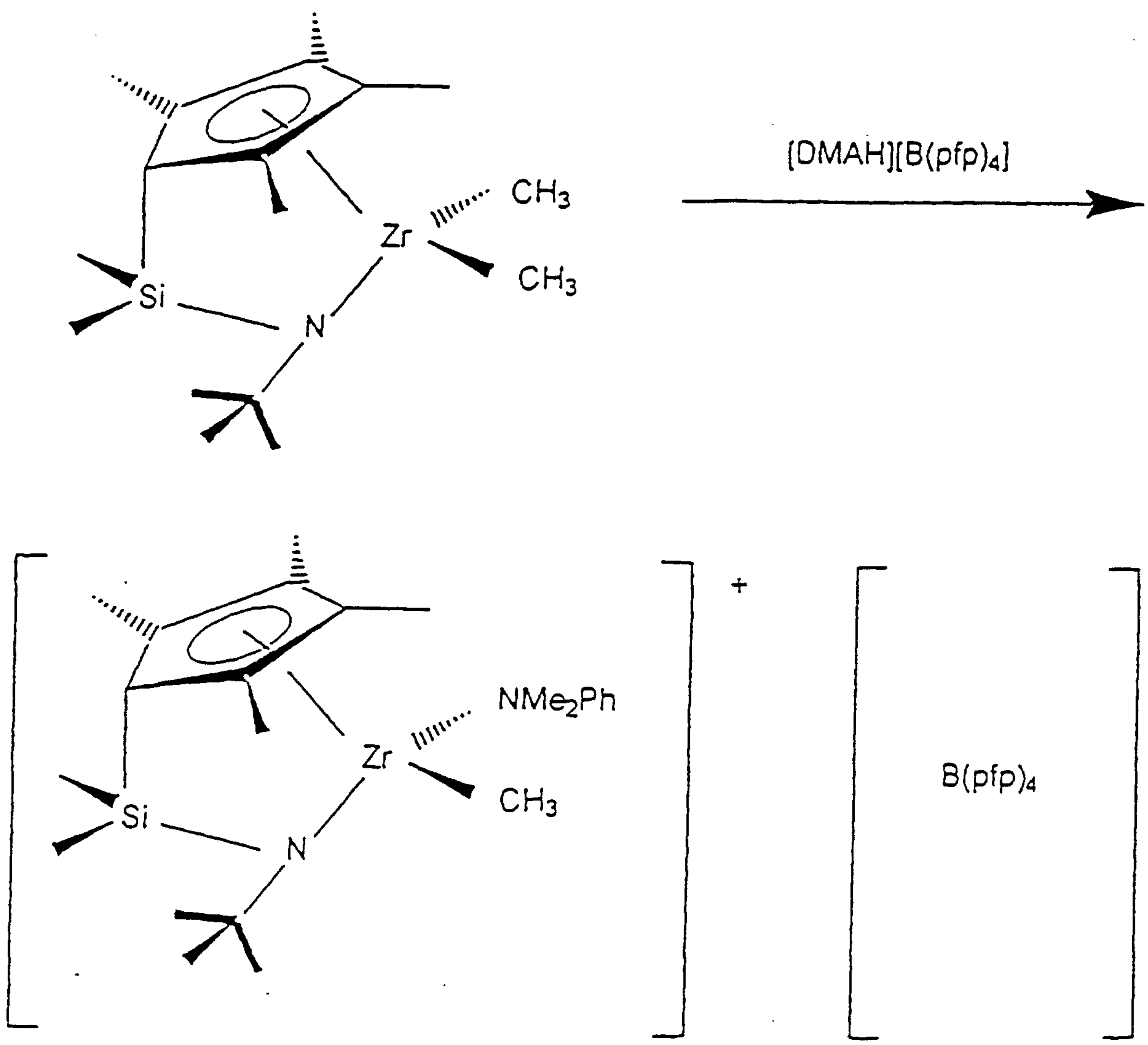


The NMR data clearly suggest that the amine is indeed coordinated to the zirconium atom, but that it is fluxional and probably has two orientations of coordination, most likely in the form of rotational isomers. The ionic catalysts species can be crystallized out at -40°C giving a pale powder. The solid state NMR spectrum of this material revealed amine coordination to the zirconium atom with more than one orientation. Addition of $d^8$-thf (thf = tetrahydrofuran) to the catalyst solution or solid produces the $d^8$-thf adduct, [$Me_2Si(Me_4C_5)$(N-t-Bu)ZrMe($d^8$-thf)$_x$][B)pfp)$_4$] and free DMA. This was expected since $d^8$-thf is a much stronger base than DMA.

Ion-exchange activators with different basicities have also been investigated. An amine which is a stronger base than DMA, such as DMT ($Me_2N$-p-Me-Ph) provides complete coordination to the zirconium atom with no fluxionality. This catalyst was produced from the reaction of [DMTH][$B(pfp)_4$] with $Me_2Si(Me_4C_5)$(N-t-Bu)$ZrMe_2$. Very little, if any, free DMT was observed in the $^{13}C$ NMR spectrum of the catalyst solution. The use of [$Bu_3NH$][$B(pfp)_4$] as the activator provided a more interesting result. It appears that when [n-$Bu_3NH$][$B(pfp)_4$] is reacted with $Me_2Si(Me_4C_5)$(N-t-Bu) $ZrMe_2$, the amine does not coordinate to the zirconium atom as illustrated in the equation below.

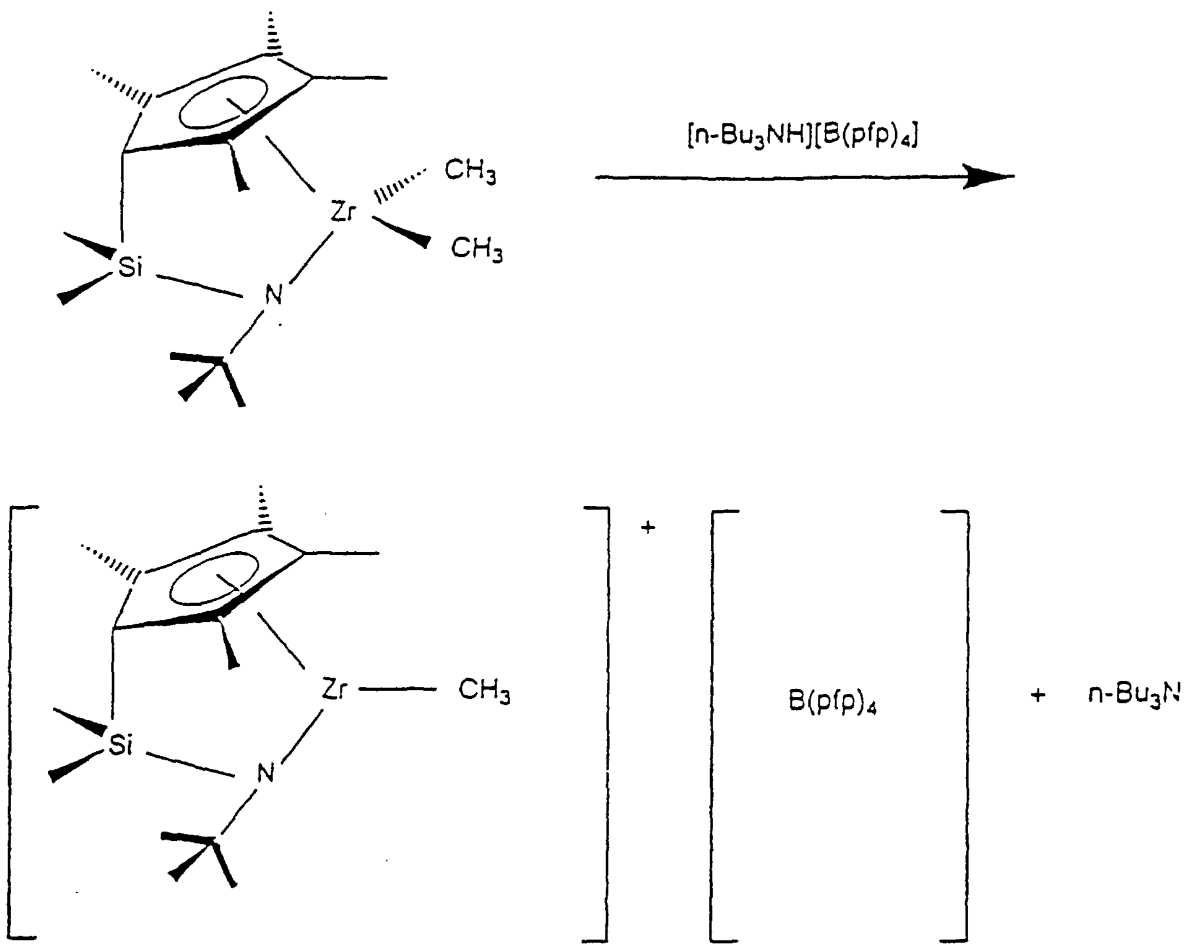


The fact that the amine is not coordinated to the metal is evidenced by the fact that the chemical shift of the amine signals are unchanged from free-amine. From a purely electronic point of view one would predict that $Bu_3N$ would be a better ligand for the cationic metal center than DMA. The reverse is the case in this system indicating that steric forces dominate the coordination chemistry. The observation of two Cp-methyl signals and one $Me_2Si$-signal suggests that the cation is a symmetric three coordinate cation and that anion and the amine ligand to not coordination strongly with the metal, the Cp-centroid, and the silicon atom.

<u>Polymerization Process</u>

In a preferred embodiment of the process of this invention the catalyst system is utilized in a liquid phase polymerization of an olefin monomer. The liquid phase process comprises the steps of contacting an olefin monomer with the catalyst system in a suitable polymerization diluent and reacting said monomer in the presence of said catalyst system for a time and at a temperature sufficient to produce a polyolefin.

The monomer for such process may comprise ethylene alone, for the production of a homopolyethylene, or ethylene in combination with an α-olefin having 3 to 18 carbon atoms for the production of an ethylene-α-olefin copolymer. Conditions for the homo- or copolymerization of ethylene are those wherein ethylene is submitted to the reaction zone at pressures of from 0.0013 bar (0.019 psi) to 3445 bar (50,000 psi) and the reaction temperature is maintained at from -100°C to 300°C, preferably -10° to 220°C, with the proviso that when used to polymerize a lower α-olefin having from 3 to 8 carbon atoms at a temperature within the range from 0°C to 100°C and at a pressure within the range from 100 kPa to 3400 kPa, the catalyst system is not a substituted monocyclopentadienyl metal complex containing compound corresponding to the formula: $CpMX_n^+A^-$ wherein Cp is a single $\eta^5$-substituted cyclpentadienyl group covalently bonded to M through a substituent: X is alkyl, aryl, aryloxy, aryl, aryloxy or alkoxy of up to 20 carbons; and n is one. The mole ratio of transition metal component to activator component is preferably from 1:1 to 200:1. The reaction time is preferably from 1 second to 1 hour.

Without limiting in any way the scope of the invention, one means for carrying out the process of the present invention is as follows: in a stirred-tank reactor liquid 1 -butene monomer is introduced. The catalyst system is introduced via nozzles in either the vapor or liquid phase. Feed ethylene gas is introduced either into the vapor phase of the reactor, or sparged into the liquid phase as is well known in the art. The reactor contains a liquid phase composed substantially of liquid 1-butene together with dissolved ethylene gas, and a vapor phase containing vapors of all monomers. The reactor temperature and pressure may be controlled via reflux of vaporizing α-olefin monomer (autorefrigeration), as well as by cooling coils, jackets, etc. The polymerization rate is controlled by the rate of catalyst addition, or by the concentration of catalyst. The ethylene content of the polymer product is determined by the ratio of ethylene to 1 -butene in the reactor, which is controlled by manipulating the relative feed rates of these components to the reactor.

Examples

In the examples the analytical techniques described below were employed for the analysis of the resulting polyolefin products. Molecular weight determinations for polyolefin products were made by Gel Permeation Chromatography (GPC) according to the following technique. Molecular weights and molecular weight distributions were measured using a Waters 150 gel permeation chromatograph equipped with a differential refractive index (DRI) detector and a Chromatix KMX-6 on-line light scattering photometer. The system was used at 135°C with 1 ,2,4-trichlorobenzene as the mobile phase. Shodex (Showa Denko America, Inc.) polystyrene gel columns 802, 803, 804 and 805 were used. This technique is discussed in "Liquid Chromatography of Polymers and Related Materials III", J. Cazes, Editor, Marcel Dekker, 1981. p. 207 which is incorporated herein by reference. No corrections for column spreading were employed: however, data on generally accepted standards, e.g. National Bureau of Standards Polyethylene 1484 and anionically produced hydrogenated polyisoprenes (an alternating ethylene-propylene copolymer) demonstrated that such corrections on Mw/Mn (=MWD) were less than 0.05 units. Mw/Mn was calculated from elution time. The numberical analyses were performed using the commercially available Beckman/CIS customized LALLS software in conjunction with the standard Gel Permeation package, run on a HP 1000 computer.

The following examples are intended to illustrate specific catalyst systems which may be used in the invention and are not intended to limit the scope of the invention.

All procedures were performed under an inert atmosphere of helium or nitrogen. Solvent choices are often optional, for example, in most cases either pentane or 30-60 petroleum ether can be interchanged. The choice between tetrahydrofuran (thf) and 30 diethyl ether is more restricted, but in several reactions, either could be used. The lithiated amides were prepared from the corresponding amines and either n-BuLi or MeLi. Published methods for preparing $LiHC_5Me_4$ include C.M. Fendrick et al. Organometallics, 3,819 (1984) and F.N. Kohler and K.H. Doll, Z. Naturtorsch, 376, 144 (1982). Other lithiated substituted cyclopentadienyl compounds are typically prepared from the corresponding cyclopentadienyl ligand and BuLi or MeLi, or by reaction of MeLi with the proper solvene. $ZrCl_4$ and $HfCl_4$ were purchased from either Aldrich Chemical Company or Cerac. Amines, silane and lithium reagents were purchased from Aldrich Chemical Company or Petrarch Systems. Activator components were prepared by known literature methods.

EXAMPLES

Synthesis of Mono-Cyclopentadienyl Complexes

1. $Me_2Si(C_5Me_4)(N\text{-}t\text{-}Bu)ZrMe_2$

Part 1. $M_4HC_5Li$(10.0g. 0.078 mol) was slowly added to a $Me_2SiCl_2$ (11.5 ml, 0.095 mol, in 225 ml of tetrahydrofuran (thf) solution). The solution was stirred for 1 hour to assure complete reaction. The thf solvent was then removed via a vacuum to is a cold trap held at -196°C. Pentane was added to precipitate out the LiCl. The mixture was filtered through Celite. The solvent was removed from the filtrate. $Me_4HC_5SiMe_2Cl$ (15.34 g, 0.071 mol) was recovered as a pale yellow liquid.

Part 2. $Me_4HC_5$,$SiMe_2Cl$ (10.0 g, 0.047 mol) was slowly added to a suspension of LiHN-t-Bu (3.68 g, 0.047 mol, ~ 100 ml thf). The mixture was stirred overnight. The thf was then removed via a vacuum to a cold trap held at -196°C. Petroleum ether (~ 100 ml) was added to precipitate out the LiCl. The mixture was filtered through Celite. The solvent was removed from the filtrate. $Me_2Si(Me_4HC_5)(HN\text{-}t\text{-}Bu)$ (11.14 g, 0.044 mol) was isolated as a pale yellow liquid.

Part 3. $Me_2Si(Me_4HC_5)(HN\text{-}t\text{-}Bu)$ (11.14 g, 0.044 mol) was diluted with ~ 100 ml $Et_2O$. MeLi (1.4 M, 64 ml, 0.090 mol) was slowly added. The mixture was allowed to stir for 1/2 hour after the final addition of MeLi. The ether was reduced in volume prior to filtering off the product. The product, $[Me_2Si(Me_4C_5)(N\text{-}t\text{-}Bu)]Li_2$, was washed with several small portions of ether, then vacuum dried.

Part 4. $[Me_2Si(Me_4C_5)(N\text{-}t\text{-}Bu)]Li_2$ (3.0 g, 0.011 mol) was suspended in ~150 ml $Et_2O$. $ZrCl_4$ (2.65 g, 0.011 mol) was slowly added and the resulting mixture was allowed to stir overnight. The ether was removed via a vacuum to a cold trap held at -196°C. Pentane was added to precipitate out the LiCl. The mixture was filtered through Celite

twice. The pentane was significantly reduced in volume and the pale yellow solid was filtered off and washed with solvent. $Me_2Si(Me_4C_5)(N\text{-}t\text{-}Bu)ZrCl_2$ (1.07 g, 0.0026 mole) was recovered. Additional $Me_2Si(Me_4C_5)(N\text{-}t\text{-}Bu)ZrCl_2$ was recovered from the filtrate by repeating the recrystallization procedure. Total yield, 1.94 g, 0.0047 mol).

Part 5. $Me_2Si(C_5Me_4)(N\text{-}t\text{-}Bu)ZrMe_2$ was prepared by adding a stoichiometric amound of MeLi (1.4 M in ether) to $Me_2Si(C_5Me_4)(N\text{-}t\text{-}Bu)ZrCl_2$ suspended in ether. The white solid was isolated in an 83% yield.

2. $MePhSi(C_5Me_4)(N\text{-}t\text{-}Bu)HfMe_2$

Part 1. $MePhSiCl_2$ (14.9 g, 0.078 mol) was diluted with ~250 ml of thf. $Me_4C_5HLi$ (10.0 g, 0.078 mol) was slowly added as a solid. The reaction solution was allowed to stir overnight. The solvent was removed via a vacuum to a cold trap held at -196°C. Petroleum ether was added to precipitate out the LiCl. The mixture was filtered through Celite, and the pentane was removed from the filtrate. $MePhSi(Me_4C_5H)Cl$ (20.8 g, 0.075 mol) was isolated as a yellow viscous liquid.

Part 2. LiHN-t-Bu (4.28 g, 0.054 mol) was dissolved in ~100 ml of thf. $MePhSi(Me_4C_5H)Cl$ (15.0 g, 0.054 mol) was added drop wise. The yellow solution was allowed to stir overnight. The solvent was removed via vacuum. Petroleum ether was added to precipitate out the LiCl. The mixture was filtered through Celite, and the filtrate was evaporated down. $MePhSi(Me_4C_5H)(NH\text{-}t\text{-}Bu)$ (16.6 g, 0.053 mol) was recovered as an extremely viscous liquid.

Part 3. $MePhSi(Me_4C_5H)(NH\text{-}t\text{-}Bu)$ (16.6 g, 0.053 mol) was diluted with ~100 ml of ether. MeLi (76 ml, 0.106 mol, 1.4 M) was slowly added and the reaction mixture was allowed to stir for ~3 hours. The ether was reduced in volume, and the lithium salt was filtered off and washed with pentane producing 20.0 g of a pale yellow solid formulated as $Li_2\,[MePhSi(Me_4C_5)(N\text{-}t\text{-}Bu)]\bullet 3/4Et_2O$.

Part 4. $Li_2[MePhSi(Me_4C_5)(N\text{-}t\text{-}Bu)]\bullet 3/4Et_2O$ (5.00 g, 0.0131 mol) was suspended in ~100 ml of $Et_2O$. $HfCl_4$ (4.20 g, 0.0131 mol) was slowly added and the reaction mixture was allowed to stir overnight. The solvent was removed via vacuum and petroleum ether was added to precipitate out the LiCl. The mixture was filtered through Celite. The filtrate was evaporated down to near dryness and filtered off. The off white solid was washed with petroleum ether. $MePhSi\,(Me_4C_5)(N\text{-}t\text{-}Bu)HfCl_2$ was recovered (3.54 g, 0.0058 mole).

Part 5. $MePhSi(Me_4C_5)(N\text{-}t\text{-}Bu)HfMe_2$ was prepared by adding a stoichiometric amount of HeLi (1.4 M in ether) to $MePhSi(Me_4C_5)(N\text{-}t\text{-}Bu)HfCl_2$ suspended in ether. The white solid could be isolated in near quantitative yield.

## Claims

**1.** Process for the homopolymerization of ethylene or copolymerization of ethylene with an α-olefin having 3 to 18 carbon atoms, wherein ethylene is submitted to a reaction zone at a pressure of from 0.0013 bar to 3445 bar and a reaction temperature is maintained at from -100 to 300°C using a catalyst system of the following formula:

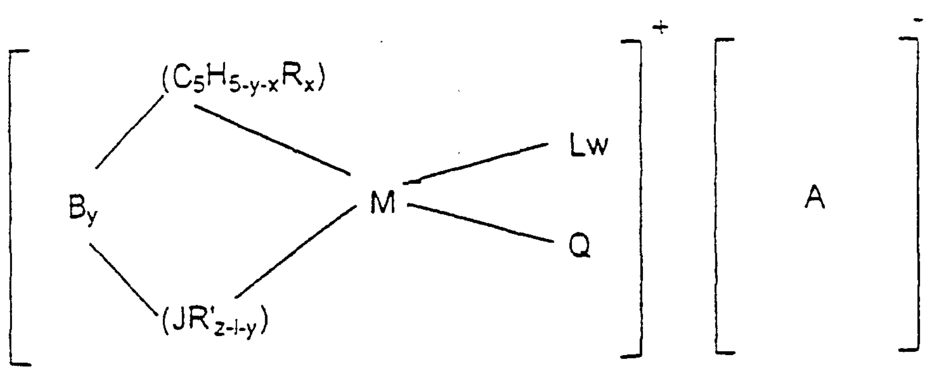

wherein: M is Zr, Hf or Ti and is in its highest formal oxidation state (+4, $d^0$ complex);

$(C_5H_{5-y-x}R_x)$ is a cyclopentadienyl ring which is substituted with from zero to four substituent groups R, "x" is 0,1, 2, 3, or 4 denoting the degree of substitution, and each substituent group R is, independently, a radical selected from a group consisting of $C_1$-$C_{20}$ hydrocarbyl radicals, substituted $C_1$-$C_{20}$ hydrocarbyl radicals wherein one or more hydrogen atoms is replaced by a halogen atom, $C_1$-$C_{20}$ hydrocarbyl-substituted metalloid radicals wherein the metalloid is selected from the Group IV A of the Periodic Table of Elements, and halogen radicals, or $(C_5H_{5-y-x}R_x)$ is a cyclopentadienyl ring in which two adjacent R-groups are joined forming a $C_4$-$C_{20}$

ring to give a polycyclic cyclopentadienyl ligand;

($JR'_{z-l-y}$) is a heteroatom ligand in which J is an element with a coordination number of three from Group V-A or an element with a coordination number of two from Group VI-A of the Periodic Table of Elements, and each R' is, independently, a radical selected from a group consisting of $C_1$-$C_{20}$ hydrocarbyl radicals, substituted $C_1$-$C_{20}$ hydrocarbyl radicals wherein one or more hydrogen atoms is replaced by a halogen atom, and "z" is the coordination of number of the element J;

Q is hydride, a $C_1$-$C_{50}$ hydrocarbyl radical, or substituted hydrocarbyl radical wherein one or more hydrogen atom is replaced by an electron-withdrawing group such as a halogen atom, or alkoxide radical, or a $C_1$-$C_{50}$ hydrocarbyl-substituted metalloid radical wherein the metalloid is selected from the Group IV-A of the Periodic Table of Elements, provided that where Q is a hydrocarbyl such Q is different from ($C_5H_{5-y-x}R_x$),

"y" is 1, B is a covalent bridging group containing a Group IV-A or V-A element;

L is a neutral Lewis base: and "w" is a number from 0 to 3, and

[A]- is a labile, bulky anion which is a single coordination complex having a plurality of lipophilic radicals covalently coordinated to and shielding a central charge-bearing metal or metalloid core. with the proviso that when used to polymerize a lower $\alpha$-olefin having from 2 to 8 carbon atoms at a temperature within the range from 0°C to 100°C and at a pressure within the range from 100 kPa to 3400 kPa, the catalyst system is not a substituted monocyclopentadienyl metal complex containing compound corresponding to the formula: $CpMX_n^+A^-$ wherein Cp is a single $\eta^5$-substituted cyclopentadienyl group covalently bonded to M through a substituent; X is hydride alkyl, aryl, dryloxy or alkoxy of up to 20 carbons; and n is one.

**2.** Process according to claim 1 in which the catalyst system is separately prepared in concentrated form and added to a polymerisation diluent or wherein catalyst system is formed in situ in a polymerisation diluent in a reactor.

**3.** Process according to claim 1 in which the catalyst system is adsorbed on a support.

**4.** Process according to claim 1 comprising the steps of contacting ethylene, either alone or in combination with an $\alpha$-olefin having 3 to 18 carbon atoms, with the catalyst system in a suitable polymerisation diluent.

**5.** Process according to claim 2, wherein the reaction temperature is maintained at from -10 to 220°C.

**6.** Process according to claim 1 in which the polymerisation is in liquid phase.

**7.** Process according to any of claims 1 to 6 wherein the heteroatom ligand group element is nitrogen, phosphorus, oxygen or sulphur.

**8.** Process system according to claim 7 in which B is a linear, branched or cyclic alkylene group having from 1 to 6 carbon atoms, an alkyl substituted sila alkylene group having from 1 to 2 silicon atoms in place of carbon atoms in the bridge or a $Si_1$-$Si_2$ alkyl substituted silanylene group.

**9.** Process according to any of the preceding claims 1 to 8 wherein R' contains from 1 to 20 carbon atoms and is a straight or branched alkyl radical, cyclic hydrocarbon radical, alkyl substituted cyclic hydrocarbon radical, aromatic radical or an alkyl substituted aromatic radical.

**10.** Process according to any of the preceding claims 1 to 9 in which the anion contains substituted phenyl rings, preferably an ortho alkyl substituted phenyl ring, or is a perfluorosubstituted anion.

**11.** Process according to any of the preceding claims 1 to 10 carried out for a time of from 1 second to 10 hours to yield a polymer having a weight average molecular weight of from 1000 to 5.000.000 and a molecular weight distribution of 1.5 or greater.

**12.** Process according to claim 1 wherein $C_5H_{5-y-x}R_x$ is tetramethylcyclopentadienyl.

**13.** Process according to claim 1 wherein B is dimethylsilyl.

**14.** Process according to claim 1 wherein $JR'_{z-1-y}$ is t-butylamide.

**15.** Process according to claim 1 wherein Q is methyl.

**16.** Process according to claim 1 wherein M is titanium.

**Patentansprüche**

**1.** Verfahren zur Homopolymerisation von Ethylen oder Copolymerisation von Ethylen mit einem α-Olefin mit 3 bis 18 Kohlenstoffatomen, bei dem Ethylen einer Reaktionszone mit einem Druck von 0,0013 bar bis 3445 bar zugeführt wird und auf einer Reaktionstemperatur von -100 bis 300°C gehalten wird, wobei ein Katalysatorsystem mit der folgenden Formel verwendet wird

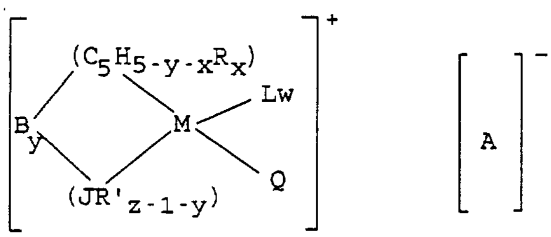

in der M Zr, Hf oder Ti ist und in seiner höchsten formalen Oxidationsstufe (+4, $d^0$-Komplex) vorliegt, $(C_5H_{5-y-x}R_x)$ ein Cyclopentadienylring ist, der mit null bis vier Substituentengruppen R substituiert ist, "x" 0, 1, 2, 3 oder 4 ist und den Substitutionsgrad bezeichnet und jede Substituentengruppe R unabhängig ein Rest ausgewählt aus einer Gruppe bestehend aus $C_1$- bis $C_{20}$-Kohlenwasserstoffresten, substituierten $C_1$- bis $C_{20}$-Kohlenwasserstoffresten, bei denen ein oder mehrere Wasserstoffatome durch ein Halogenatom ersetzt sind, mit $C_1$- bis $C_{20}$-Kohlenwasserstoff substituierten Metalloidresten, bei denen das Metalloid ausgewählt ist aus der Gruppe IV A des Periodensystems der Elemente, und Halogenresten ist, oder $(C_5H_{5-y-x}R_x)$ ein Cyclopentadienylring ist, in dem zwei benachbarte R-Gruppen unter Bildung eines $C_4$- bis $C_{20}$-Rings verbunden sind, um einen polycyclischen Cyclopentadienylliganden zu ergeben;
$(JR'_{z-1-y})$ ein Heteroatomligand ist, in dem J ein Element mit einer Koordinationszahl von drei aus der Gruppe V-A oder ein Element mit einer Koordinationszahl von zwei aus der Gruppe VI-A des Periodensystems der Elemente ist und jedes R' unabhängig ein Rest ausgewählt aus einer Gruppe bestehend aus $C_1$- bis $C_{20}$-Kohlenwasserstoffresten und substituierten $C_1$- bis $C_{20}$-Kohlenwasserstoffresten, in denen ein oder mehrere Wasserstoffatome durch ein Halogenatom ersetzt sind, ist, und "z" die Koordinationszahl des Elements J ist;
Q Hydrid, ein $C_1$- bis $C_{50}$-Kohlenwasserstoffrest oder ein substituierter Kohlenwasserstoffrest ist, in dem ein oder mehrere Wasserstoffatome durch eine elektronenanziehende Gruppe wie ein Halogenatom oder einen Alkoxidrest ersetzt sind oder ein mit $C_1$- bis $C_{50}$-Kohlenwasserstoff substituierter Metalloidrest ist, in dem das Metalloid ausgewählt ist aus der Gruppe IV-A des Periodensystems der Elemente, mit der Maßgabe, dass, wenn Q ein Kohlenwasserstoff ist, dieses Q sich von $(C_5H_{5-y-x}R_x)$ unterscheidet,
"y" 1 ist, B eine kovalente Brückengruppe ist, die ein Gruppe-IV-A- oder -V-A-Element enthält,
L eine neutrale Lewisbase ist und "w" eine Zahl von 0 bis 3 ist, und
$[A]^-$ ein labiles raumerfüllendes Anion ist, das ein einziger Koordinationskomplex mit mehreren lipophilen Resten ist, die kovalent um ein ladungstragendes Metall- oder Metalloidzentrum koordiniert sind und dieses abschirmen, mit der Maßgabe, dass bei Verwendung zum Polymerisieren eines niedrigeren α-Olefins mit 2 bis 8 Kohlenstoffatomen bei einer Temperatur im Bereich von 0°C bis 100°C und einem Druck im Bereich von 100 kPa bis 3400 kPa das Katalysatorsystem kein substituierter Monocyclopentadienyl-Metall-Komplex ist, der eine Verbindung entsprechend der Formel $CpMX_n^+A^-$ enthält, in der Cp eine einzige $\eta^5$-substituierte Cyclopentadienylgruppe ist, die über einen Substituenten kovalent an M gebunden ist, X Hydrid, Alkyl, Aryl, Aryloxy oder Alkoxy mit bis zu 20 Kohlenstoffatomen ist und n eins ist.

**2.** Verfahren nach Anspruch 1, in dem das Katalysatorsystem getrennt in konzentrierter Form hergestellt und einem Polymerisationsverdünnungsmittel zugegeben wird, oder bei dem das Katalysatorsystem in situ in einem Polymerisationsverdünnungsmittel in dem Reaktor gebildet wird.

3. Verfahren nach Anspruch 1, bei dem das Katalysatorsystem auf einem Träger adsorbiert ist.

4. Verfahren nach Anspruch 1, bei dem in Stufen Ethylen entweder allein oder in Kombination mit α-Olefin mit 3 bis 18 Kohlenstoffatomen in einem geeigneten Polymerisationsverdünnungsmittel mit dem Katalysatorsystem kontaktiert wird.

5. Verfahren nach Anspruch 2, bei dem die Reaktionstemperatur auf -10 bis 220°C gehalten wird.

6. Verfahren nach Anspruch 1, bei dem die Polymerisation in der flüssigen Phase erfolgt.

7. Verfahren nach einem der Ansprüche 1 bis 6, bei dem das Element der Heteroatomligandengruppe Stickstoff, Phosphor, Sauerstoff oder Schwefel ist.

8. Verfahren nach Anspruch 7, bei dem B eine lineare, verzweigte oder cyclische Alkylengruppe mit 1 bis 6 Kohlenstoffatomen, eine alkylsubstituierte Silaalkylengruppe mit 1 bis 2 Siliciumatomen anstelle der Kohlenstoffatome in der Brücke oder eine alkylsubstituierte $Si_1$- bis $Si_2$-Silanylengruppe ist.

9. Verfahren nach einem der vorhergehenden Ansprüche 1 bis 8, bei dem R' 1 bis 20 Kohlenstoffatome enthält und ein geradkettiger oder verzweigter Alkylrest, cyclischer Kohlenwasserstoffrest, alkylsubstituierter cyclischer Kohlenwasserstoffrest, aromatischer Rest oder ein alkylsubstituierter aromatischer Rest ist.

10. Verfahren nach einem der vorhergehenden Ansprüche 1 bis 9, bei dem das Anion substituierte Phenylringe enthält, vorzugsweise einen ortho-alkylsubstituierten Phenylring, oder ein perfluorsubstituiertes Anion ist.

11. Verfahren nach einem der vorhergehenden Ansprüche 1 bis 10, das während einer Zeitdauer von 1 Sekunde bis 10 Stunden durchgeführt wird, um ein Polymer mit einem durchschnittlichen Molekulargewicht (Gewichtsmittel) von 1000 bis 5 000 000 und einer Molekulargewichtsverteilung von 1,5 oder höher zu ergeben.

12. Verfahren nach Anspruch 1, bei dem $C_5H_{5-y-x}R_x$ Tetramethylcyclopentadienyl ist.

13. Verfahren nach Anspruch 1, bei dem B Dimethylsilyl ist.

14. Verfahren nach Anspruch 1, bei dem $JR'_{z-1-y}$ tert.-Butylamid ist.

15. Verfahren nach Anspruch 1, bei dem Q Methyl ist.

16. Verfahren nach Anspruch 1, bei dem M Titan ist.

## Revendications

1. Procédé pour l'homopolymérisation ou la copolymérisation de l'éthylène avec une α-oléfine ayant 3 à 18 atomes de carbone dans lequel de l'éthylène est soumis à une pression de zone réactionnelle de 0,0013 bar à 3445 bars et une température de réaction maintenue dans l'intervalle de -100 à 300°C en utilisant une formulation de catalyseur répondant à la formule suivante

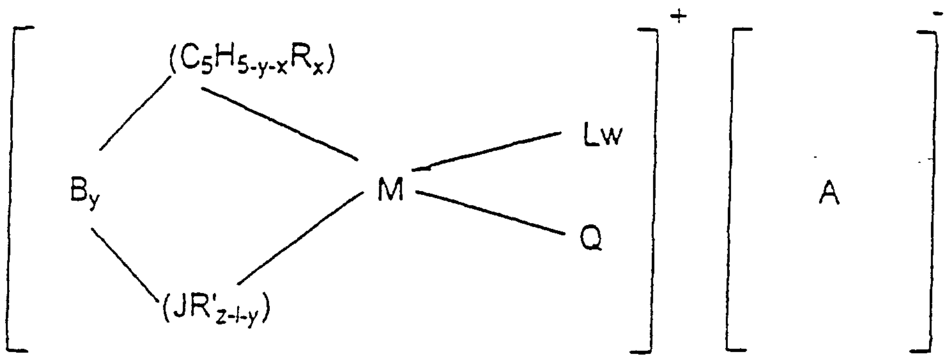

dans laquelle M représente Zr, Hf ou Ti et est l'état d'oxydation formel le plus élevé (+4, complexe $d^0$) ;

$(C_5H_{5-y-x}R_x)$ représente un noyau cyclopentadiényle qui est substitué avec zéro à quatre groupes R servant de substituants, "x" est égal à 0, 1, 2, 3 ou 4 et désigne le degré de substitution, et chaque groupe R servant de substituant représente, indépendamment, un radical choisi dans le groupe consistant en radicaux hydrocarbyle en $C_1$ à $C_{20}$, radicaux hydrocarbyle en $C_1$ à $C_{20}$ substitués dans lesquels un ou plusieurs atomes d'hydrogène sont remplacés par des atomes d'halogènes, radicaux métalloïdiques à substituants hydrocarbyle en $C_1$ à $C_{20}$ dans lesquels le métalloïde est choisi dans le Groupe IVA du Tableau Périodique des Eléments, et radicaux halogéno, ou bien $(C_5H_{5-y-x}R_x)$ représente un noyau cyclopentadiényle dans lequel deux groupes R adjacents sont joints en formant un noyau en $C_4$ à $C_{20}$ donnant un ligand cyclopentadiényle polycyclique ;
$(JR'_{z-1-y})$ représente un ligand hétéroatomique dans lequel J désigne un élément ayant un indice de coordination égal à trois du Groupe V-A ou un élément ayant un indice de coordination égal à deux du Groupe VI-A du Tableau Périodique des Eléments, et chaque groupe R' représente, indépendamment, un radical choisi dans le groupe consistant en radicaux hydrocarbyle en $C_1$ à $C_{20}$, radicaux hydrocarbyle en $C_1$ à $C_{20}$ substitués dans lesquels un ou plusieurs atomes d'hydrogène sont remplacés par des atomes d'halogènes et "z" désigne l'indice de coordination de l'élément J ;
Q représente un radical hydrure, un radical hydrocarbyle en $C_1$ à $C_{50}$ ou un radical hydrocarbyle substitué dans lequel un ou plusieurs atomes d'hydrogène sont remplacés par des groupes électrophiles tels qu'un atome d'halogène ou un radical alcoolate, ou bien un radical métalloïdique à substituant hydrocarbyle en $C_1$ à $C_{50}$ dans lequel le métalloïde est choisi dans le Groupe IV-A du Tableau Périodique des Eléments, sous réserve que, lorsque Q représente un radical hydrocarbyle, ce radical Q soit différent de $(C_5H_{5-y-x}R_x)$,
"y" est égal à 1, B représente un groupe covalent de pontage contenant un élément du Groupe IV-A ou V-A, L représente une base neutre de Lewis ; et "w" représente un nombre de 0 à 3 ; et
$[A]^-$ représente un anion volumineux labile qui consiste en un complexe de coordination simple ayant une pluralité de radicaux lipophiles en coordination covalente avec, et faisant écran à, un noyau métallique ou métalloïdique central porteur de charge, sous réserve que, lors de l'utilisation pour la polymérisation d'une $\alpha$-oléfine inférieure ayant 2 à 8 atomes de carbone à une température comprise dans l'intervalle de 0°C à 100°C et sous une pression comprise dans l'intervalle de 100 kPa à 3400 kPa, la formulation de catalyseur ne consiste pas en un composé contenant un complexe monocyclopentadiényle métallique substitué, répondant à la formule : $CpMX_n^+A^-$ dans laquelle Cp représente un groupe cyclopentadiényle $\eta^5$ substitué unique lié par covalence à M par l'intermédiaire d'un substituant ; X représente un groupe hydrure, alkyle, aryle, aryloxy ou alkoxy ayant jusqu'à 20 atomes de carbone ; et n est égal à un.

**2.** Procédé suivant la revendication 1, dans lequel la formulation de catalyseur est préparée séparément sous forme concentrée et est ajoutée à un diluant de polymérisation, ou bien dans lequel la formulation de catalyseur est formée in situ dans un diluant de polymérisation dans un réacteur.

**3.** Procédé suivant la revendication 1, dans lequel la formulation de catalyseur est adsorbée sur un support.

**4.** Procédé suivant la revendication 1, comprenant l'étape de mise en contact d'éthylène, seul ou en association avec une $\alpha$-oléfine ayant 3 à 18 atomes de carbone, avec la formulation de catalyseur dans un diluant de polymérisation convenable.

**5.** Procédé suivant la revendication 2, dans lequel la température réactionnelle est maintenue dans l'intervalle de -10 à 220°C.

**6.** Procédé suivant la revendication 1, dans lequel la polymérisation est effectuée en phase liquide.

**7.** Procédé suivant l'une quelconque des revendications 1 à 6, dans lequel l'élément du groupe hétéroatomique servant de ligand est l'azote, le phosphore, l'oxygène ou le soufre.

**8.** Procédé suivant la revendication 7, dans lequel B représente un groupe alkylène linéaire, ramifié ou cyclique ayant 1 à 6 atomes de carbone, un groupe sila-alkylène à substituant alkyle ayant 1 ou 2 atomes de silicium à la place d'atomes de carbone dans le pont ou un groupe silanylène à substituant alkyle en $Si_1$-$Si_2$.

**9.** Procédé suivant l'une quelconque des revendications 1 à 8 précédentes, dans lequel R' contient 1 à 20 atomes de carbone et consiste en un radical alkyle droit ou ramifié, un radical hydrocarboné cyclique, un radical hydrocarboné cyclique à substituant alkyle, un radical aromatique ou un radical aromatique à substituant alkyle.

**10.** Procédé suivant l'une quelconque des revendications 1 à 9 précédentes, dans lequel l'anion contient des noyaux phényle substitués, de préférence un noyau phényle à substituant ortho-alkyle ou est un anion perfluoro-substitué.

**11.** Procédé suivant l'une quelconque des revendications 1 à 10 précédentes, mis en oeuvre pendant un temps de 1 seconde à 10 heures pour obtenir un polymère ayant une moyenne pondérale du poids moléculaire de 1000 à 5 000 000 et une distribution des poids moléculaires égale ou supérieure à 1,5.

**12.** Procédé suivant la revendication 1, dans lequel $C_5H_{5-y-x}R_x$ représente un radical tétraméthylcyclopentadiényle.

**13.** Procédé suivant la revendication 1, dans lequel B représente un groupe diméthylsilyle.

**14.** Procédé suivant la revendication 1, dans lequel $JR'_{z-1-y}$ représente un radical tertio-butylamide.

**15.** Procédé suivant la revendication 1, dans lequel Q représente un radical méthyle.

**16.** Procédé suivant la revendication 1, dans lequel M représente le titane.